(19) **Europäisches Patentamt / European Patent Office / Office européen des brevets**

(11) **EP 4 250 052 B1**

(12) **EUROPEAN PATENT SPECIFICATION**

(45) Date of publication and mention
of the grant of the patent:
**03.12.2025 Bulletin 2025/49**

(21) Application number: **21893412.3**

(22) Date of filing: **09.07.2021**

(51) International Patent Classification (IPC):
**G05D 23/22** *(2006.01)*  **G05D 23/24** *(2006.01)*
**G05B 13/04** *(2006.01)*  **G05D 23/19** *(2006.01)*

(52) Cooperative Patent Classification (CPC):
**G05D 23/1917; G05B 13/048; G05D 23/22;
G05D 23/24**

(86) International application number:
**PCT/CN2021/105380**

(87) International publication number:
**WO 2022/105260 (27.05.2022 Gazette 2022/21)**

(54) **TEMPERATURE CONTROL SYSTEM FOR DEVICE AND TEMPERATURE CONTROL METHOD**

TEMPERATURSTEUERUNGSSYSTEM FÜR EINE VORRICHTUNG UND
TEMPERATURSTEUERUNGSVERFAHREN

SYSTÈME DE RÉGULATION DE TEMPÉRATURE POUR DISPOSITIF ET PROCÉDÉ DE
RÉGULATION DE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2020  CN 202011286748**

(43) Date of publication of application:
**27.09.2023  Bulletin 2023/39**

(73) Proprietor: **Changchun Jetty Automotive
Technology Co., Ltd.
Changchun City, Jilin Province 130000 (CN)**

(72) Inventor: **WANG, Chao
Changchun, Jilin 130000 (CN)**

(74) Representative: **Dehns
10 Old Bailey
London EC4M 7NG (GB)**

(56) References cited:
**EP-A1- 2 908 206**    **CN-A- 107 539 137**
**CN-A- 107 817 685**    **CN-A- 107 817 685**
**CN-A- 109 598 371**    **CN-A- 110 286 584**
**CN-A- 110 956 338**    **CN-A- 111 854 109**
**CN-A- 112 416 034**

**Description**

<u>TECHNICAL FIELD</u>

The present disclosure relates to the technical field of electrical equipment, and particularly to a temperature control system for a device and a temperature control method.

<u>BACKGROUND</u>

As well known, a power supply device generates heat when supplying power to a load. In order to avoid the abnormal operation and reduction of service life of the power supply device caused by temperature rise, heat dissipation measures will be taken for the power supply device.
In the prior art, the temperature of the power supply device is obtained by a temperature acquisition device, and then the power supply device is cooled by means of radiating fins, air-cooled or liquid-cooled radiators, etc. A sampling circuit of the temperature acquisition device is usually a thermistor, which generates different resistances depending on a temperature change, thus obtaining the temperature of the power supply device. However, when a large current flows through the thermistor, it usually affects the sampling precision of the thermistor, i.e., the thermistor cannot quickly sense the temperature change, resulting in the obtained temperature of the power supply device being inaccurate, thus affecting the operation and the service life of the power supply device.
The patent applications CN110286584A and CN107817685A disclose techniques for controlling the temperature of a device, which are based on predicted future values for the temperature of the device.

<u>SUMMARY</u>

In view of the problems in the prior art, embodiments of the present disclosure provide a temperature control system for a device according to claim 1 and a temperature control method according to claim 11, so as to at least partially solve the problems in the prior art.
In an aspect, the present disclosure provides a temperature control system for a device, including a temperature detection module, a temperature control module and a temperature adjustment module. The temperature detection module is configured to detect and obtain a temperature at a current moment of a device. The temperature control module is configured to obtain a predicted temperature at a next moment based on the temperature at the current moment and a temperature prediction model, and to output a temperature adjustment instruction to the temperature adjustment module based on the predicted temperature at the next moment and a temperature threshold. And the temperature adjustment module is configured to adjust a temperature of the device based on the temperature adjustment instruction.
In another aspect, the present disclosure provides a temperature control method, including: obtaining a temperature at a current moment of a device;

> obtaining a predicted temperature at a next moment based on the temperature at the current moment and a temperature prediction model; and
> outputting a temperature adjustment instruction to adjust a temperature of the device based on the predicted temperature at the next moment and a temperature threshold.

In still another aspect, the present disclosure provides an electronic device, including a memory, a processor and a computer program stored in the memory and executable on the processor. The processor is configured to execute the program, to implement the steps of the temperature control method according to any one of the above embodiments.
In yet another aspect, the present disclosure provides a computer-readable storing medium having a computer program. When being executed by a processor, the computer program implements the steps of the temperature control method according to any one of the above embodiments.
The temperature control system for the device and the temperature control method provided in the embodiments of the present disclosure include a temperature detection module, a temperature control module and a temperature adjustment module. The temperature detection module is configured to detect and obtain the temperature at the current moment of the device. The temperature control module is configured to obtain the predicted temperature at the next moment based on the temperature at the current moment and the temperature prediction model, and to output a temperature adjustment instruction to the temperature adjustment module based on the predicted temperature at the next moment and a temperature threshold. The temperature adjustment module is configured to adjust the temperature of the device based on the temperature adjustment instruction, so as to improve the temperature stability of the device during operation, thereby ensuring the electric energy conversion efficiency of the device.

BRIEF DESCRIPTION OF THE DRAWINGS

For a clearer illustration of technical features in the embodiments of the present disclosure, a brief description of the drawings for the embodiments will be given below. Obviously, the drawings described below involve only some embodiments of this disclosure. For those of ordinary skill in the art, other drawings can be derived from these drawings without any inventive efforts. In the drawings,

FIG. 1 illustrates a structural diagram of a temperature control system for a device according to an embodiment of the present disclosure.

FIG. 2 illustrates a structural diagram of a thermal resistor temperature measurement circuit according to an embodiment of the present disclosure.

FIG. 3 illustrates a structural diagram of a temperature control system for a device according to another embodiment of the present disclosure.

FIG. 4 illustrates a structural diagram of a temperature detection precision processing unit according to an embodiment of the present disclosure.

FIG. 5 illustrates a structural diagram of a voltage follower circuit according to an embodiment of the present disclosure.

FIG. 6 illustrates a structural diagram of a feedback amplifier circuit according to an embodiment of the present disclosure.

FIG. 7 illustrates a structural diagram of a filter circuit according to an embodiment of the present disclosure.

FIG. 8 illustrates a structural diagram of a temperature control system for a device according to still another embodiment of the present disclosure.

FIG. 9 illustrates a structural diagram of a heating unit according to an embodiment of the present disclosure.

FIG. 10 illustrates a structural diagram of a cooling unit according to an embodiment of the present disclosure.

FIG. 11 illustrates a flowchart of a temperature control method according to an embodiment of the present disclosure.

FIG. 12 illustrates a flowchart of a temperature control method according to another embodiment of the present disclosure.

FIG. 13 illustrates a flowchart of a temperature control method according to still another embodiment of the present disclosure.

FIG. 14 illustrates a temperature graph of a device according to an embodiment of the present disclosure.

FIG. 15 illustrates an entity structural diagram of an electronic device according to an embodiment of the present disclosure.

Reference numerals:

1: temperature detection module; 2: temperature control module; 3: temperature adjustment module; 11: temperature detection unit; 12: temperature detection precision processing unit; 31: heating unit; 32: cooling unit; 121: first comparator; 122: first capacitor; 123: second comparator; 124: first resistor; 125: second resistor; 126: third resistor; 127: fourth resistor; 128: second capacitor; 129: inductor; 311: heating resistance wire; 312: first MOS transistor; 313: fifth resistor; 314: sixth resistor; 321: second MOS transistor; 322: seventh resistor; 323: radiating fan.

DETAILED DESCRIPTION OF THE PREFERRED EMBODIMENTS

For a clearer understanding of the objectives, technical features and effects of the embodiments of the present disclosure, specific embodiments will now be described with reference to the drawings.

The device in the embodiments of the present disclosure include, but is not limited to, an AC-DC converter, a DC charger, or other devices in a DC charging pile.

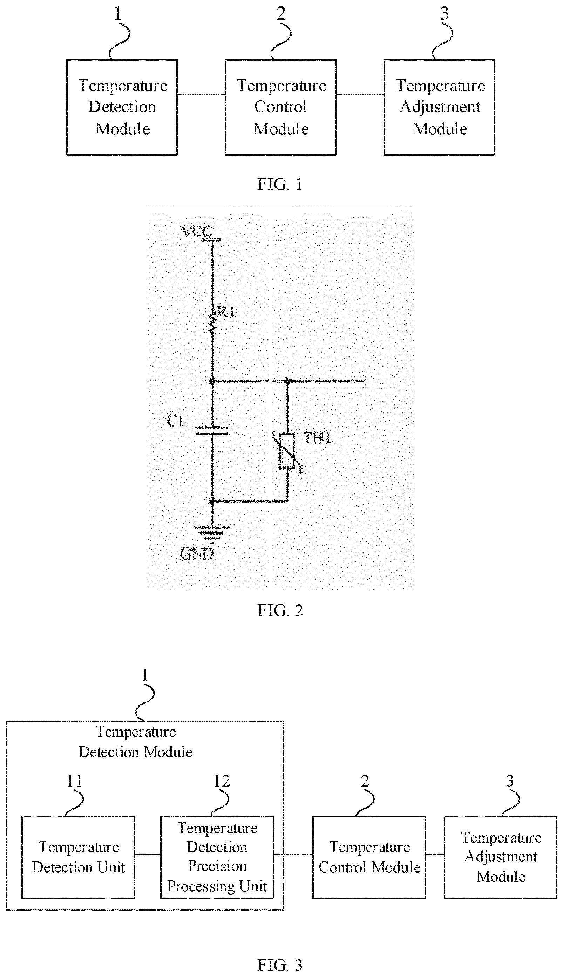

FIG. 1 illustrates a structural diagram of a temperature control system for a device according to an embodiment of the present disclosure. As illustrated in FIG. 1, a temperature control system for a device according to an embodiment of the present disclosure includes a temperature detection module 1, a temperature control module 2 and a temperature adjustment module 3.

The temperature detection module 1 is configured to detect and obtain a temperature at a current moment of the device. The temperature control module 2 is configured to obtain a predicted temperature at a next moment based on the temperature at the current moment and a temperature prediction model, and to output a temperature adjustment instruction to the temperature adjustment module 3 based on the predicted temperature at the next moment and a temperature threshold. The temperature adjustment module 3 is configured to adjust a temperature of the device based on the temperature adjustment instruction.

Specifically, the temperature detection module 1 detects a temperature of the device in real time to obtain the temperature at the current moment of the device, and then sends the temperature at the current moment to the temperature control module 2. The temperature control module 2 inputs the received temperature at the current moment to the temperature prediction model to obtain the predicted temperature at the next moment, and then obtains the temperature adjustment instruction based on the predicted temperature at the next moment and the temperature threshold. If a first difference obtained by subtracting the temperature threshold from the predicted temperature at the next moment is greater than a first threshold, the temperature adjustment instruction makes the temperature adjustment module 3 cool the device. If the predicted temperature at the next moment is less than the temperature threshold and a second difference obtained by subtracting the predicted temperature at the next moment from the temperature threshold is greater than a second threshold, the temperature adjustment instruction makes the temperature adjustment module 3 to heat the device. The temperature control module 2 outputs the temperature adjustment instruction to the temperature adjustment module 3, which adjusts the temperature of the device based on the received temperature adjustment instruction. The temperature threshold is preset depending on actual needs, which is not limited in the embodiments of the present disclosure. The temperature adjustment instruction is preset. A time interval between the current moment and the next moment is set depending on actual needs, which is not limited in the embodiments of the present disclosure.

The temperature control system for the device according to the embodiment of the present disclosure incudes a temperature detection module, a temperature control module and a temperature adjustment module. The temperature detection module is configured to detect and obtain the temperature at the current moment of the device. The temperature control module is configured to obtain the predicted temperature at the next moment based on the temperature at the current moment and the temperature prediction model, and to output a temperature adjustment instruction to the temperature adjustment module based on the predicted temperature at the next moment and the temperature threshold. The temperature adjustment module is configured to adjust the temperature of the device based on the temperature adjustment instruction, so as to improve the temperature stability of the device during operations, thereby ensuring the electric energy conversion efficiency of the device. In addition, since the temperature of the device is adjusted based on the predicted temperature at the next moment, the predicted temperature can be compensated, thereby realizing pre-regulation of the temperature of the device.

On the basis of the above embodiments, further, the temperature prediction model is pre-obtained.

Specifically, the temperature control module may collect historical temperature training data of the device, train and obtain the temperature prediction model based on the historical temperature training data and an initial model to obtain the temperature prediction model, and configure the obtained temperature prediction model into the temperature control module. The initial model includes, but is not limited to, a neural network model, and is set depending on actual needs, which is not limited in the embodiment of the present disclosure.

On the basis of the above embodiments, further, the temperature prediction model is obtained by self-learning based on the historical temperature data.

Specifically, the temperature control module may collect the historical temperature data of the device, and obtain the temperature prediction model by self-learning based on the historical temperature data. The self-learning may be implemented by a machine learning model, and is set depending on actual needs, which is not limited in the embodiments of the present disclosure.

It is understandable that since the temperature data of the device is continuously updated, the historical temperature data can be updated periodically, and the temperature prediction model can be obtained by self-learning again.

For example, the obtained historical temperature data is taken as historical temperature training data to obtain the temperature prediction model by training based on the historical temperature data and the initial model. Next, the historical temperature data is periodically updated as the historical temperature training data, and then the temperature prediction model is obtained again by training based on the historical temperature data and the initial model.

On the basis of the above embodiments, further, as illustrated in FIG. 3, the temperature detection module 1 includes a temperature detection unit 11, which is a thermocouple temperature measurement circuit, a thermal resistor temperature measurement circuit or a temperature acquisition chip, so as to realize the temperature detection for the device. The temperature acquisition chip is selected depending on actual needs, which is not limited in the embodiments of the present disclosure.

FIG. 2 illustrates a structural diagram of a thermal resistor temperature measurement circuit according to an embodiment of the present disclosure. As illustrated in FIG. 2, on the basis of the above embodiments, further, the thermal resistor temperature measurement circuit according to the embodiment of the present disclosure includes a resistor R1, a capacitor C1 and a thermistor TH1. The resistor R1 includes a first end connected to a power supply VCC, and a second end connected to a first end of the capacitor C1 and a first end of the thermistor TH1, respectively. A second end of the capacitor C1 and a second end of the thermistor TH1 are grounded.

The thermocouple temperature measurement circuit can be configured as a circuit structure similar to that illustrated in FIG. 2, just by replacing the thermistor TH1 in FIG. 2 with a thermocouple.

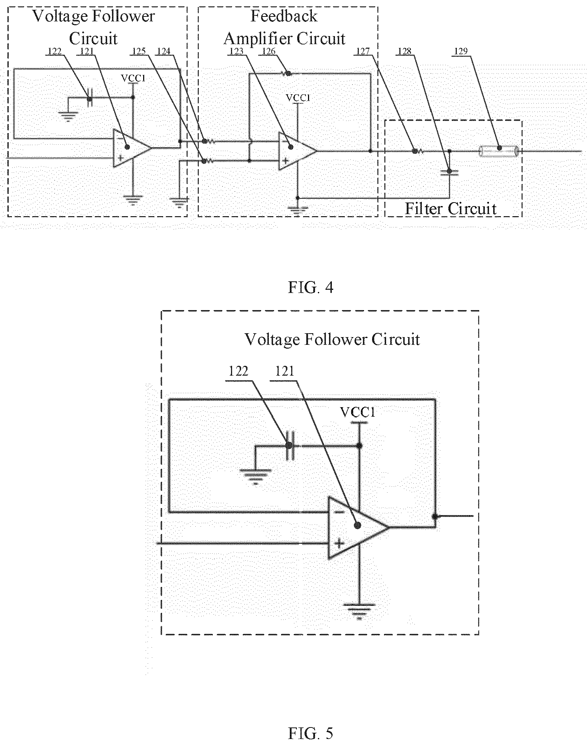

FIG. 3 illustrates a structural diagram of a temperature control system for a device according to another embodiment of the present disclosure. FIG. 4 illustrates a structural diagram of a temperature detection precision processing unit according to an embodiment of the present disclosure. As illustrated in FIG. 3 and FIG. 4, on the basis of the above embodiments, further, the temperature detection module 1 includes a temperature detection precision processing unit 12 including a voltage follower circuit, a feedback amplifier circuit and a filter circuit.

The voltage follower circuit includes a first comparator 121 and a first capacitor 122. The first comparator 121 includes a first end connected to the temperature detection unit 11, a second end connected to an output end of the first comparator 121, a third end connected to a first power supply VCC1, and a fourth end grounded. The first capacitor 122 includes a first end grounded, and a second end connected to the first power supply VCC1.

The feedback amplifier circuit includes a second comparator 123, a first resistor 124, a second resistor 125 and a third resistor 126. A first end of the first resistor 124 is connected to the output end of the first comparator 121. A second end of the first resistor 124 is connected to a second end of the second comparator 123. A first end of the second comparator 123 is connected to a first end of the third resistor 126 and a second end of the second resistor 125, respectively. A second end of the third resistor 126 is connected to an output end of the second comparator 123. A first end of the second resistor 125 is grounded. A third end of the second comparator 123 is connected to the first power supply VCC1, and a fourth end of the second comparator 123 is grounded.

The filter circuit includes a fourth resistor 127, a second capacitor 128 and an inductor 129. A first end of the fourth resistor 127 is connected to the output end of the second comparator 123. A second end of the fourth resistor 127 is connected to a first end of the second capacitor 128 and a first end of the inductor 129, respectively. A second end of the second capacitor 128 is grounded. A second end of the inductor 129 is connected to the temperature control module 2.

The voltage follower circuit is used to isolate an acquisition circuit from a post-processing circuit. The feedback amplifier circuit is used to amplify the isolated small signal in proportion to improve the precision. The filter circuit is used for signal filtering and eliminating line conduction interference. The temperature detection precision processing unit improves the temperature acquisition accuracy of the device.

FIG. 5 illustrates a structural diagram of a voltage follower circuit according to an embodiment of the present disclosure. As illustrated in FIG. 3 and FIG. 5, on the basis of the above embodiments, further, the temperature detection module 1 includes a temperature detection precision processing unit 12 including a voltage follower circuit.

The voltage follower circuit includes a first comparator 121 and a first capacitor 122. The first comparator 121 includes a first end connected to the temperature detection unit 11, a second end connected to an output end of the first comparator 121, a third end connected to the first power supply VCC1, and a fourth end grounded. The first capacitor 122 includes a first end grounded, a second end connected to the first power supply VCC1. An output end of the first comparator 121 may be connected to the temperature control module 2.

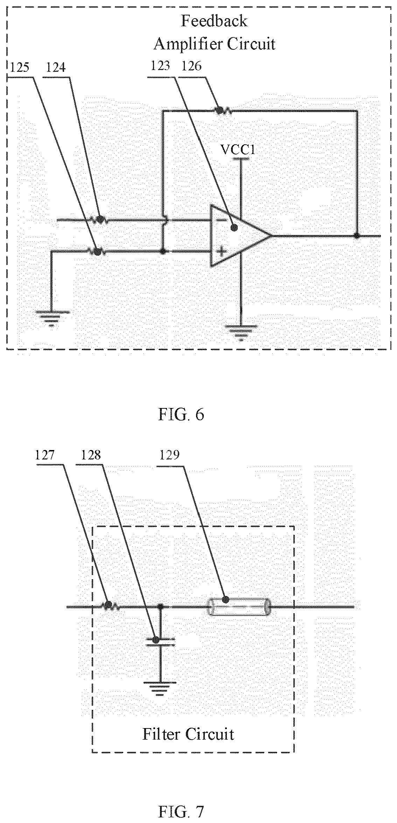

FIG. 6 illustrates a structural diagram of a feedback amplifier circuit according to an embodiment of the present disclosure. As illustrated in FIG. 3 and FIG. 6, on the basis of the above embodiments, further, the temperature detection module 1 includes a temperature detection precision processing unit 12 including a feedback amplifier circuit.

The feedback amplifier circuit includes a second comparator 123, a first resistor 124, a second resistor 125 and a third resistor 126. A second end of the first resistor 124 is connected to a second end of the second comparator 123. A first end of the second comparator 123 is connected to a first end of the third resistor 126 and a second end of the second resistor 125, respectively. A second end of the third resistor 126 is connected to an output end of the second comparator 123. A first end of the second resistor 125 is grounded. A third end of the second comparator 123 is connected to the first power supply VCC1. A fourth end of the second comparator 123 is grounded. A first end of the first resistor 124 may be connected to the temperature detection unit 11. An output end of the second comparator may be connected to the temperature control module 2.

FIG. 7 illustrates a structural diagram of a filter circuit according to an embodiment of the present disclosure. As illustrated in FIG. 3 and FIG. 7, on the basis of the above embodiments, further, the temperature detection module 1 includes a temperature detection precision processing unit 12 including a filter circuit.

The filter circuit includes a fourth resistor 127, a second capacitor 128 and an inductor 129. A second end of the fourth resistor 127 is connected to a first end of the second capacitor 128 and a first end of the inductor 129, respectively. A second end of the second capacitor 128 is grounded. A second end of the inductor 129 is connected to the temperature control module 2. A first end of the fourth resistor 127 may be connected to the temperature detection unit 11.

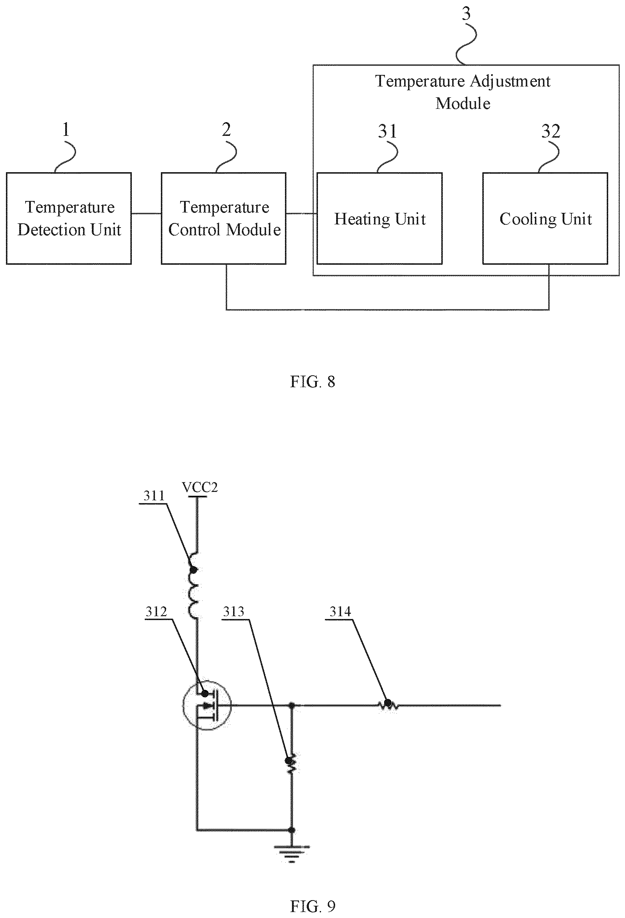

FIG. 8 illustrates a structural diagram of a temperature control system for a device according to another embodiment of the present disclosure. As illustrated in FIG. 8, on the basis of the above embodiments, further, the temperature adjustment module 3 includes a heating unit 31 configured to heat the device to increase the temperature thereof, and a cooling unit 32 configured to cool the device to decrease the temperature thereof.

The temperature control system for the device according to an embodiment of the present disclosure can increase and decrease the temperature of the device by the temperature adjustment module, and is suitable for all kinds of weather. Particularly, for an outdoor device, it is necessary to cool the device in summer and heat the device in winter to ensure the electric energy conversion efficiency of the device.

On the basis of the above embodiments, further, the heating unit 31 can realize heating by means of heating resistance wire, copper electric heating plate, aluminum electric heating plate, ceramic electric heating, stainless steel

**EP 4 250 052 B1**

electric heating tube, controlling circulating air duct heating or chemical reagent reaction heating, etc.

The heating resistance wire, the copper electric heating plate, the aluminum electric heating plate, the ceramic electric heating and the stainless-steel electric heating tube can cooperate with the MOS transistor for temperature adjustment and heating control, and the air is supplied by a fan. The principle of circulating air duct heating is to control opening and closing of an air duct for the cooling air, that is, to close an outlet of the air duct when heating is needed, so that hot air around an electronic component is circulated inside the device to supplement heat for any other electronic component not generating heat, rather than being discharged outside the device. The chemical reagent heating is to dispose a closed and independent chemical reaction unit inside the device, where the reaction temperature is controlled by controlling a feeding amount of chemical reagents, and then the heat is circulated, by the blowing of the fan, to the electronic component in the device which needs a temperature compensation. The chemical reagents may be, for example, CaO and $H_2O$, which react with each other to produce $CaOH_2$ with heat generation.

FIG. 9 illustrates a structural diagram of a heating unit according to an embodiment of the present disclosure. As illustrated in FIG. 9, the heating unit 31 includes a heating resistance wire 311, a first MOS transistor 312, a fifth resistor 313 and a sixth resistor 314.

A first end of the heating resistance wire 311 is connected to the second power supply VCC2. A second end of the heating resistance wire 311 is connected to a drain of the first MOS transistor 312. A gate of the first MOS transistor 312 is connected to a first end of the fifth resistor 313 and a first end of the sixth resistor 314, respectively. A source of the first MOS transistor 312 and a second end of the fifth resistor 313 are grounded. A second end of the sixth resistor 314 is connected to the temperature control module 2.

When the device needs to be heated, its temperature may be increased by the heating of the heating resistance wire 311. The heating resistance wire may be replaced with a copper heating plate, an aluminum heating plate, ceramic or a stainless-steel electric heating tube, which cooperate with the MOS transistor for temperature adjustment to control heating.

On the basis of the above embodiments, further, the cooling unit 32 may realize cooling by means of liquid-cooled circulation cooling, metal heat pipe conduction cooling, graphite sheet conduction cooling, semiconductor cooling, chemical reagent cooling or radiating fan, etc.

The liquid-cooled circulation cooling is implemented by adopting cooling liquid as a medium, which takes the heat away by circulating, and then discharging the excess heat out of the device by a radiator and a radiating fan. The metal heat pipe conduction cooling and the graphite sheet conduction cooling are to attach a heat conduction piece (metal or graphite) to a surface of a component with a strong heat generation, and blow the conducted excess heat into an air exhaust duct by a radiating fan to discharge the heat out of the device. The semiconductor cooling is to connect a semiconductor to a power supply to be electrified, so that a cold end thereof is close to a heat-generating component and a hot end thereof is close to a radiating fan, and heat is discharged out of the device to achieve a heat dissipation effect inside the device. The chemical reagent cooling is to dispose a closed and independent chemical reaction unit inside the device, so that excess heat around a heat-generating electronic component can be reduced by absorbing ambient heat through a chemical reaction to cool the device.

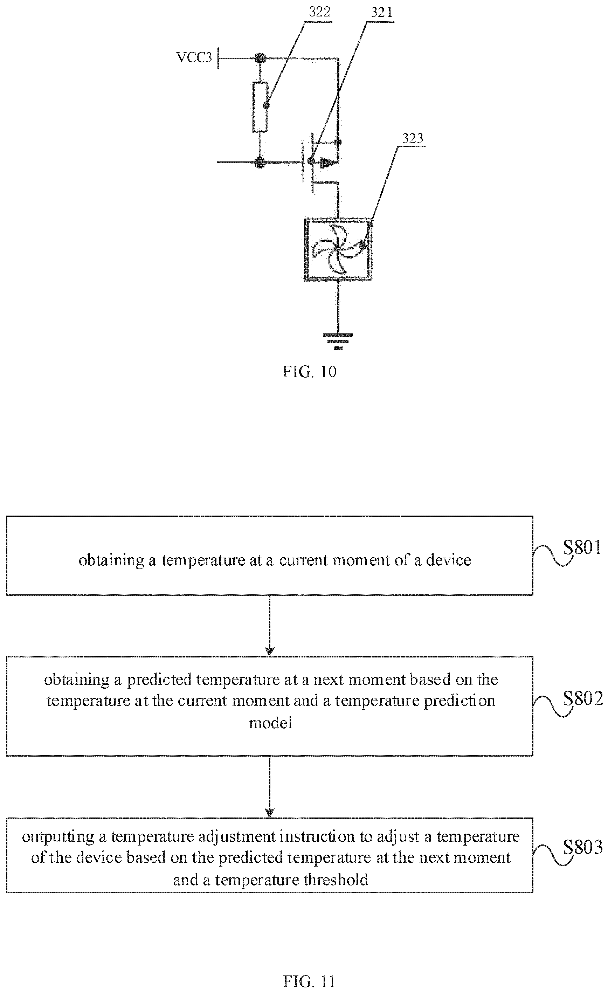

FIG. 10 illustrates a structural diagram of a cooling unit according to an embodiment of the present disclosure. As illustrated in FIG. 10, on the basis of the above embodiments, further, the cooling unit 32 includes a second MOS transistor 321, a seventh resistor 322 and a radiating fan 323.

A first end of the seventh resistor 322 and a drain of the second MOS transistor 321 are connected to a third power supply VCC3. A gate of the second MOS transistor 321 and a second end of the seventh resistor 322 are connected to the temperature control module 2. A source of the second MOS transistor 321 is connected to a first end of the radiating fan 323. A second end of the radiating fan 323 is grounded.

When the device needs to be cooled, its temperature may be decreased by the radiating fan 323. It is understandable that the temperature may also be decreased in other ways such as water cooling, which is selected depending on the actual situation and is not limited in the embodiments of the present disclosure.

On the basis of the above embodiments, further, the temperature control module 2 is a microprocessor, a Field Programmable Gate Array (FPGA), or a Complex Programmable Logic Device (CPLD).

For example, an analog quantity acquisition pin of an analog-to-digital converter of the microprocessor is connected to the second end of the inductor 129 of the filter circuit, so as to obtain a temperature at a current moment output by the temperature detection module 1. A first control output pin of the microprocessor is connected to the second end of the seventh resistor 322 and the gate of the second MOS transistor 321, respectively, so as to output a temperature adjustment instruction to control the fan 323 to rotate for cooling. A second control output pin of the microprocessor is connected to the second end of the sixth resistor 314, so as to output a temperature adjustment instruction to control the heating resistance wire 311 for heating.

Embodiments of the present disclosure provides a charging system, including the temperature control system for the device described in any one of the above embodiments.

The application scenarios of the temperature control system for the device according to the embodiments of the

6

present disclosure will be described below with a specific embodiment. The device is an AC-DC converter disposed in a charging pile capable of charging an electric vehicle, and the temperature control system for the device according to the embodiments of the present disclosure is configured for the AC-DC converter in the charging pile.

When the charging pile is located outdoors in northeast China, the weather is cold in winter and the outdoor temperature is low, and the weather is hot in summer and the outdoor temperature is high. When the electric vehicle is charged with the charging pile in winter, it is necessary to heat the AC-DC converter due to the low outdoor temperature. The temperature detection module 1 may collect a temperature at a current moment of the AC-DC converter in real time. The temperature control module 2 obtains a predicted temperature at a next moment of the AC-DC converter based on the temperature at the current moment and a temperature prediction model, and outputs a temperature adjustment instruction to the temperature adjustment module 3 based on the predicted temperature at the next moment and a temperature threshold. The temperature adjustment module 3 heats the AC-DC converter to make it operate within a certain range of the temperature threshold. When the electric vehicle is charged with the charging pile in summer, it is necessary to cool the AC-DC converter due to the high outdoor temperature and the fact that the temperature of the AC-DC converter increases during operation. The temperature detection module 1 may collect a temperature at a current moment of the AC-DC converter in real time. The temperature control module 2 obtains a predicted temperature at a next moment of the AC-DC converter based on the temperature at the current moment and a temperature prediction model, and outputs a temperature adjustment instruction to the temperature adjustment module 3 based on the predicted temperature at the next moment and a temperature threshold. The temperature adjustment module 3 cools the AC-DC converter to make it operate within a certain range of the temperature threshold.

In a case where the charging pile is located outdoors in Xinjiang region of China with a large temperature difference between day and night, when the electric vehicle is charged with the charging pile at noon, the temperature control system for the device according to the embodiments of the present disclosure cools the AC-DC converter due to the high outdoor temperature and the fact that the temperature of the AC-DC converter increases during operation, so as to make it operate within a certain range of the temperature threshold. When the electric vehicle is charged with the charging pile at night, the temperature control system for the device according to the embodiments of the present disclosure heats the AC-DC converter due to the low outdoor temperature, so as to make it operate within a certain range of the temperature threshold.

FIG. 11 illustrates a flowchart of a temperature control method according to an embodiment of the present disclosure. As illustrated in FIG. 11, a temperature control method according to an embodiment of the present disclosure may be applied to the temperature control system for the device described in any one of the above embodiments, including: S801: obtaining a temperature at a current moment of a device.

Specifically, a temperature detection module may detect a temperature of the device in real time to obtain the temperature at the current moment of the device, and then send the temperature at the current moment to a temperature control module, which can receive the current-moment temperature.

S802: obtaining a predicted temperature at the next moment based on the temperature at the current moment and a temperature prediction model.

Specifically, the temperature control module inputs the obtained temperature at the current moment to the temperature prediction model to obtain a predicted temperature at the next moment of the device. The temperature prediction model may be obtained by training based on historical temperature training data.

S803: outputting a temperature adjustment instruction to adjust a temperature of the device based on the predicted temperature at the next moment and a temperature threshold.

Specifically, the temperature control module may obtain a temperature adjustment instruction based on the obtained predicted temperature at the next moment and a temperature threshold, and then send the temperature adjustment instruction to the temperature adjustment module which adjusts a temperature of the device based on the temperature adjustment instruction.

For example, the temperature control module outputs the temperature adjustment instruction to decrease the temperature of the device after determining that the predicted temperature at the next moment is greater than the temperature threshold and a first difference obtained by subtracting the temperature threshold from the predicted temperature at the next moment is greater than a first threshold. The temperature control module outputs the temperature adjustment instruction to increase the temperature of the device after determining that the predicted temperature at the next moment is less than the temperature threshold and a second difference obtained by subtracting the predicted temperature at the next moment from the temperature threshold is greater than a second threshold.

The temperature control method according to the embodiment of the present disclosure obtains the temperature at the current moment of the device, obtains the predicted temperature at the next moment based on the temperature at the current moment and the temperature prediction model, and outputs the temperature adjustment instruction to adjust the temperature of the device based on the predicted temperature at the next moment and the temperature threshold, so as to improve the temperature stability of the device during operation, thereby ensuring the electric energy conversion efficiency of the device. In addition, since the temperature of the device is adjusted based on the predicted temperature at the next moment, the predicted temperature can be compensated, thereby realizing pre-regulation of the temperature of the device.

On the basis of the above embodiments, further, the temperature prediction model is pre-obtained.

Specifically, the temperature control module may collect historical temperature training data of the device, train the temperature prediction model based on the historical temperature training data and an initial model to obtain the temperature prediction model, and configure the obtained temperature prediction model into the temperature control module. The initial model includes, but is not limited to, a neural network model, and is set depending on actual needs, which is not limited in the embodiment of the present disclosure.

On the basis of the above embodiments, further, the temperature prediction model is obtained by self-learning based on the historical temperature data.

Specifically, the temperature control module may collect the historical temperature data of the device, and obtain the temperature prediction model by self-learning based on the historical temperature data. The self-learning may be implemented by a machine learning model, and is set depending on actual needs, which is not limited in the embodiments of the present disclosure.

It is understandable that since the temperature data of the device is continuously updated, the historical temperature data can be updated periodically, and the temperature prediction model can be obtained by self-learning again.

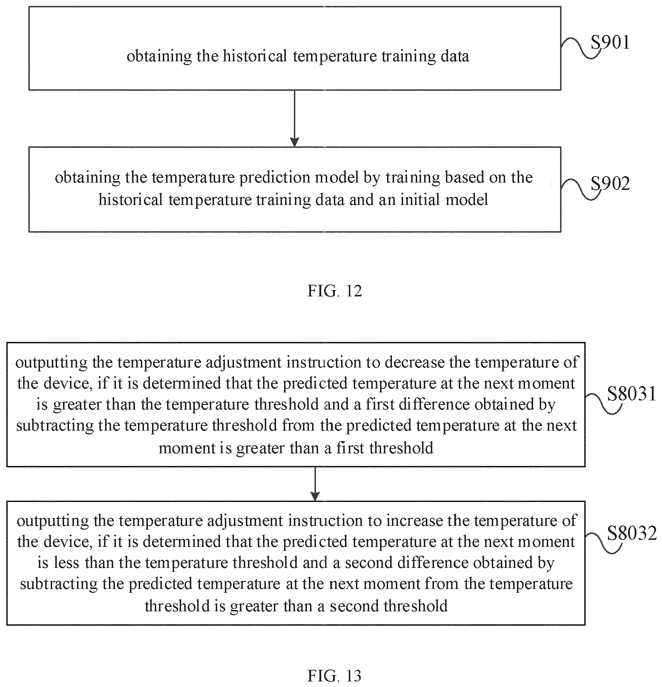

FIG. 12 illustrates a flowchart of a temperature control method according to another embodiment of the present disclosure. As illustrated in FIG. 12, the temperature prediction model is obtained by training based on historical temperature training data, and the steps of obtaining the temperature prediction model by training based on the historical temperature training data include: S901: obtaining the historical temperature training data.

Specifically, when the device operates normally, the temperature of the device is collected at a unit time interval within a preset time period to obtain a temperature of the device at each moment. The server may obtain the temperature at each moment as the historical temperature training data, which includes a temperature at moment a and a temperature at moment a+1 which are corresponding to each other, where a is a positive integer and less than the number of data in the historical temperature training data. The number of data in the historical temperature training data is set depending on actual experiences, which is not limited in the embodiments of the present disclosure. The preset time period is determined depending on actual needs, which is not limited in the embodiments of the present disclosure. The unit time interval may be set as 1 to 3 seconds according to actual experiences, which is not limited in the embodiments of the present disclosure.

S902: obtaining the temperature prediction model by training based on the historical temperature training data and an initial model.

Specifically, the server may divide the obtained historical temperature training data into a training set and a verification set. By taking a temperature at moment b in the training set as input data and a temperature at moment b+1 as output data, the initial model can be trained to obtain a temperature prediction model to be determined, where b is a positive integer and less than or equal to the number of data in the training set. By taking a temperature at moment f in the verification set as input data and inputting it to the temperature prediction model to be determined, a predicted temperature at moment f+1 can be output, where f is a positive integer and less than or equal to the number of data in the verification set. The temperature at a next moment of each moment in the training set is compared with the corresponding predicted temperature, and if an absolute value of a difference therebetween is less than or equal to a deviation threshold, the predicted temperature is accurate, otherwise the predicted temperature is inaccurate. By counting the numbers of the accurate and inaccurate predicted temperatures at each moment in the verification set, a prediction accuracy of the temperature prediction model to be determined can be calculated. If the prediction accuracy is greater than an accuracy threshold, the temperature prediction model to be determined is taken as the temperature prediction model. Otherwise, parameters and/or the historical temperature training data should be adjusted for the model training again. The initial model includes, but is not limited to, a neural network model. The deviation threshold is set according to actual experiences, which is not limited in the embodiment of the present disclosure. The accuracy threshold is set according to actual experiences, which is not limited in the embodiment of the present disclosure.

For example, the initial model is a three-layer neural network model, which may be expressed as follows:

$$\hat{x}(t+1) = \sum_{i=1}^{m} v_i \mathrm{g}\left(\int_0^T \omega_i(t)f(x_t)dt - \theta_i\right) - \theta$$

where $\hat{x}(t+1)$ represents a predicted temperature at moment t+1, m represents the number of hidden layer nodes, $v_i$ represents a connection weight from an i-th hidden layer node to an output node, $g$ represents a fine-tuning coefficient, $\omega_i(t)$ represents a connection weight function corresponding to the i-th hidden layer node; $\omega_i(t) = \sum_{t=1}^{T} 0.91 x(t)$, where $x(t)$

represents a temperature at moment t, T represents the number of samples; $f\left(x_t\right)=0.982e^{-\frac{(x_t-1.06)^2}{2}}$ , • where $x_t$ represents the temperature at moment t, $\theta_i$ represents an i-th hidden layer neuron threshold, $\theta$ represents an output layer neuron threshold, and i is a positive integer and less than or equal to m. The m is set depending on actual needs (e.g., set as 5 or 6), which is not limited in the embodiments of the present disclosure. The g is set depending on actual needs (e.g., set as 1), which is not limited in the embodiments of the present disclosure.

For example, it may be set that the number m of the hidden layer nodes is 6, the initial value of the connection weight $v_i$ from the hidden layer node to the output node is 0.01, the initial value of the hidden layer neuron threshold $\theta_i$ is 0.002, the initial value of the output layer neuron threshold $\theta$ is 0.03, the learning rate is 0.07 to 0.22, and the number of samples of the historical temperature training data is 49 to 130.

The temperature prediction model obtained by training with the three-layer neural network model has high prediction efficiency and accuracy.

FIG. 13 illustrates a flowchart of a temperature control method according to still another embodiment of the present disclosure. As illustrated in FIG. 13, on the basis of the above embodiments, further, outputting a temperature adjustment instruction to adjust the temperature of the device based on the predicted temperature at the next moment and a temperature threshold includes: S803 1: outputting the temperature adjustment instruction to decrease the temperature of the device, if it is determined that the predicted temperature at the next moment is greater than the temperature threshold and a first difference obtained by subtracting the temperature threshold from the predicted temperature at the next moment is greater than a first threshold.

Specifically, the temperature control module compares the predicted temperature at the next moment with the temperature threshold, and if the predicted temperature at the next moment is greater than the temperature threshold, a first difference is then calculated by subtracting the temperature threshold from the predicted temperature at the next moment and then compared with a first threshold. If the first difference is greater than the first threshold, it means that the predicted temperature at the next moment is too high and the temperature should be decreased. In this case, the temperature adjustment instruction may be output to decrease the temperature of the device, so as to control the temperature at the next moment in advance.

For example, the temperature control module may send a temperature adjustment instruction to the cooling unit of the temperature adjustment module to decrease the temperature of the device, so as to make the actual temperature at the next moment lower than the predicted temperature at the next moment, thus meeting operating temperature requirements of the device and achieving the purpose of pre-regulating the temperature of the device.

S8032: outputting the temperature adjustment instruction to increase the temperature of the device, if it is determined that the predicted temperature at the next moment is less than the temperature threshold and a second difference obtained by subtracting the predicted temperature at the next moment from the temperature threshold is greater than a second threshold.

Specifically, the temperature control module compares the predicted temperature at the next moment with the temperature threshold, and if the predicted temperature at the next moment is less than the temperature threshold, a second difference is then calculated by subtracting the temperature threshold from the predicted temperature at the next-moment and then compared with a second threshold. If the second difference is greater than the second threshold, it means that the predicted temperature at the next moment is too low and the temperature should be increased. In this case, the temperature adjustment instruction may be output to increase the temperature of the device, so as to control the temperature at the next moment in advance.

For example, the temperature control module may send a temperature adjustment instruction to the heating unit of the temperature adjustment module to increase the temperature of the device, so as to make the actual temperature at the next moment higher than the predicted temperature at the next moment, thus meeting operating temperature requirements of the device and achieving the purpose of pre-regulating the temperature of the device in advance.

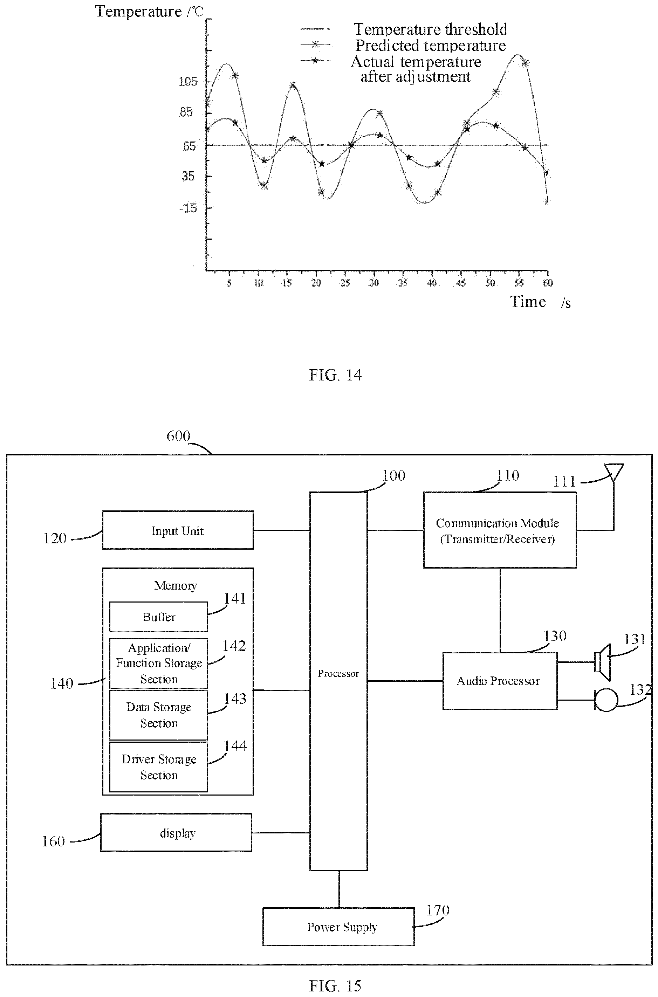

FIG. 14 illustrates a temperature graph of a device according to an embodiment of the present disclosure. As illustrated in FIG. 14, a temperature control method according to an embodiment of the present disclosure is adopted to control a temperature of a device, and 65°C is a temperature threshold of the device, i.e., an ideal operating temperature. As can be seen from FIG. 14, a fluctuation range of the actual temperature around 65°C after adjustment at moment t+1 is much less than that of a predicted temperature around 65°C at moment t+1, which greatly improves the temperature stability of the device during operation.

FIG. 15 illustrates an entity structural diagram of an electronic device according to an embodiment of the present disclosure. As illustrated in FIG. 15, an electronic device 600 may include a processor 100 and a memory 140. The memory 140 is coupled to the processor 100. The processor 100 may call a logic instruction in the memory 140 to perform the following method: obtaining a temperature at the current moment of a device; obtaining a predicted temperature at the next moment based on the temperature at the current moment and a temperature prediction model obtained by training based on historical temperature training data; and outputting a temperature adjustment instruction to adjust a temperature of the device based on the predicted temperature at the next moment and a temperature threshold.

This embodiment discloses a computer program product including a computer program stored in a non-transient computer-readable storage medium, and the computer program includes a program instruction. When the program instruction is executed by a computer, the computer can implement the methods according to the above method embodiments, including, for example, obtaining a temperature at the current moment of a device; obtaining a predicted temperature at the next moment based on the temperature at the current moment and a temperature prediction model obtained by training based on historical temperature training data; and outputting a temperature adjustment instruction to adjust a temperature of the device based on the predicted temperature at the next moment and a temperature threshold.

This embodiment provides a computer-readable storage medium storing a computer program. When being executed by a processor, the computer program implements the methods according to the above method embodiments, including, for example, obtaining a temperature at the current moment of a device; obtaining a predicted temperature at the next moment based on the temperature at the current moment and a temperature prediction model obtained by training based on historical temperature training data; and outputting a temperature adjustment instruction to adjust a temperature of the device based on the predicted temperature at the next moment and a temperature threshold..

As illustrated in FIG. 15, the electronic device 600 may further include a communication module 110, an input unit 120, an audio processing unit 130, a display 160, and a power supply 170. It should be noted that the electronic device 600 does not necessarily include all the components illustrated in FIG. 15. In addition, the electronic device 600 may further include a component not illustrated in FIG. 15, for which the prior art may be referred to. It should be noted that FIG. 15 is exemplary, and any other type of structure may also be adopted to supplement or replace the structure to realize the telecommunication function or other functions.

As illustrated in FIG. 15, the processor 100 is sometimes called a controller or an operation control, and may include a microprocessor, or any other processor device and/or logic device. The processor 100 receives an input and controls the operations of various components of the electronic device 600.

The memory 140 may be, for example, one or more of a buffer, a flash memory, a hard drive, a removable medium, a volatile memory, a nonvolatile memory or any other suitable device. The memory may store information related to a failure, and a program for executing relevant information. In addition, the processor 100 may be configured to execute the program stored in the memory 140 to realize information storage or processing, etc.

The input unit 120 is configured to provide an input to the processor 100. The input unit 120 is, for example, a key or a touch input device. The power supply 170 is configured to supply power to the electronic device 600. The display 160 is configured to display a display object such as an image or a text, etc. The display 160 may be, for example, an LCD display, but is not limited thereto.

The memory 140 may be a solid-state memory, for example, a read only memory (ROM), a random-access memory (RAM), a SIM card, etc. It may also be a memory that stores information even when power is off, and can be selectively erased and provided with more data. An example of the memory 140 is sometimes called an EPROM, etc. The memory 140 may also be some other type of device. The memory 140 includes a buffer 141 (also called a buffer memory). The memory 140 may include an application/function storage section 142 configured to store application programs and function programs or execute an operation flow of the electronic device 600 by the processor 100.

The memory 140 may further include a data storage section 143 which stores data, such as contacts, digital data, pictures, sounds and/or any other data used by the electronic device. A driver storage section 144 of the memory 140 may include various driver programs for the communication function and/or other functions (e.g., messaging application, address book application, etc.) of the electronic device.

The communication module 110 includes a transmitter/receiver which transmits and receives signals via an antenna 111. The communication module 110 is coupled to the processor 100 to provide an input signal and receive an output signal, which may be the same as the case of a conventional mobile communication terminal.

Based on different communication technologies, a plurality of communication modules 110, such as a cellular network module, a Bluetooth module and/or a wireless local area network module, may be provided in a same electronic device. The communication module 110 is further coupled to a speaker 131 and a microphone 132 via an audio processor 130 to provide an audio output via the speaker 131 and receive an audio input from the microphone 132, thereby realizing the general telecommunications function. The audio processor 130 may include any suitable buffer, decoder, amplifier, etc. In addition, the audio processor 130 is further coupled to the processor 100, so that audios can be recorded locally through the microphone 132 and sound stored locally can be played through the speaker 131.

Those skilled in the art should understand that the embodiments of this disclosure can be provided as methods, systems or computer program products. Therefore, this disclosure may be implemented in the form of fully-hardware embodiments, fully-software embodiments, or combined software-hardware embodiments. In addition, this disclosure may employ the form of a computer program product implemented on one or more computer storage medium (including but not limited to disk memory, CD-ROM, and optical memory) containing computer programming code.

This disclosure is set forth by referring to flow charts and/or block diagrams for the methods, devices (systems), and computer program products of the embodiments. It should be understood that each process and/or block of the flow charts and/or block diagrams as well as combinations of the processes and/or boxes of the flow charts and/or block diagrams can be realized by computer program instructions. These computer program instructions can be provided to general-purpose computers, special-purpose computers, embedded processors or the processors of other programmable data processing devices to produce a machine, so that an apparatus for implementing the functions designated in one or more processes of the flowcharts and/or one or more blocks of the block diagrams can be produced by the instructions executed by the processor of the computer or other programmable data processing device.

These computer program instructions can also be stored in a computer-readable storage medium which can guide a computer or other programmable data processing device to operate in a particular way, so that an article of manufacture including an instruction apparatus can be produced by the instructions stored in the storage medium, with the instruction apparatus implementing the functions designated in one or more processes of the flowcharts and/or one or more blocks of the block diagram.

These computer program instructions may also be loaded onto a computer or other programmable data processing device to make the computer or other programmable data processing device perform a sequence of computer-implemented operations, so that the instructions executed by the computer or other programmable data processing device realize one or more processes of the flowcharts and/or one or more blocks of the block diagram.

**Claims**

1.  A temperature control system for a device, comprising a temperature detection module (1), a temperature control module (2) and a temperature adjustment module (3), wherein

    the temperature detection module (1) is configured to detect and obtain a temperature at a current moment of a device;
    the temperature control module (2) is configured to obtain a predicted temperature at a next moment based on the temperature at the current moment and a temperature prediction model, and to output a temperature adjustment instruction to the temperature adjustment module based on the predicted temperature at the next moment and a temperature threshold; and
    the temperature adjustment module (3) is configured to adjust a temperature of the device based on the temperature adjustment instruction;
    the temperature control system being **characterised in that**:

    the temperature control module (2) is further configured to output the temperature adjustment instruction to decrease the temperature of the device, if it is determined that the predicted temperature at the next moment is greater than the temperature threshold and a first difference obtained by subtracting the temperature threshold from the predicted temperature at the next moment is greater than a first threshold; and
    the temperature control module (2) is further configured to output the temperature adjustment instruction to increase the temperature of the device, if it is determined that the predicted temperature at the next moment is less than the temperature threshold and a second difference obtained by subtracting the predicted temperature at the next moment from the temperature threshold is greater than a second threshold.

2.  The temperature control system according to claim 1, wherein the temperature prediction model is obtained by self-learning based on historical temperature data, or the temperature prediction model is pre-obtained.

3.  The temperature control system according to claim 1, wherein the temperature detection module (1) comprises a temperature detection unit (11) which is a thermocouple temperature measurement circuit, a thermal resistor temperature measurement circuit, or a temperature acquisition chip.

4.  The temperature control system according to claim 3, wherein

    the temperature detection module (1) further comprises a temperature detection precision processing unit (12) comprising a voltage follower circuit, wherein the voltage follower circuit comprises a first comparator (121) and a first capacitor (122); the first comparator (121) comprises a first end connected to the temperature detection unit (11), a second end connected to an output end of the first comparator (121), a third end connected to a first power supply, and a fourth end grounded; and the first capacitor (122) comprises a first end grounded, and a second end connected to the first power supply, or
    the temperature detection module (1) further comprises a temperature detection precision processing unit (12) comprising a feedback amplifier circuit, wherein the feedback amplifier circuit comprises a second comparator (123), a first resistor (124), a second resistor (125) and a third resistor (126), wherein a second end of the first resistor (124) is connected to a second end of the second comparator (123), a first end of the second comparator (123) is connected to a first end of the third resistor (126) and a second end of the second resistor (125), respectively, a second end of the third resistor (126) is connected to an output end of the second comparator (123), a first end of the second resistor (125) is grounded, a third end of the second comparator (123) is connected to a first power supply, and a fourth end of the second comparator (123) is grounded, or

the temperature detection module (1) further comprises a temperature detection precision processing unit (12) comprising a filter circuit, wherein the filter circuit comprises a fourth resistor (127), a second capacitor (128) and an inductor (129), wherein a second end of the fourth resistor (127) is connected to a first end of the second capacitor (128) and a first end of the inductor (129), respectively, a second end of the second capacitor (128) is grounded, and a second end of the inductor (129) is connected to the temperature control module (2).

5. The temperature control system according to claim 1, wherein the temperature adjustment module (3) comprises a heating unit (31) and a cooling unit (32).

6. The temperature control system according to claim 5, wherein the heating unit (31) realizes heating by means of heating resistance wire (311), copper electric heating plate, aluminum electric heating plate, ceramic electric heating, stainless-steel electric heating tube, controlling circulating air duct heating or chemical reagent reaction heating, or the cooling unit (32) realizes cooling by means of liquid-cooled circulation cooling, metal heat pipe conduction cooling, graphite sheet conduction cooling, semiconductor cooling, chemical reagent cooling or radiating fan (323).

7. The temperature control system according to claim 5, wherein the heating unit (31) comprises a heating resistance wire (311), a first MOS transistor (312), a fifth resistor (313) and a sixth resistor (314), wherein

a first end of the heating resistance wire (311) is connected to a second power supply, a second end of the heating resistance wire (311) is connected to a drain of the first MOS transistor (312), a gate of the first MOS transistor (312) is connected to a first end of the fifth resistor (313) and a first end of the sixth resistor (314), respectively, a source of the first MOS transistor (312) and a second end of the fifth resistor (313) are grounded, and a second end of the sixth resistor (314) is connected to the temperature control module (2).

8. The temperature control system according to claim 5, wherein the cooling unit (32) comprises a second MOS transistor (321), a seventh resistor (322) and a radiating fan (323), wherein

a first end of the seventh resistor (322) and a drain of the second MOS transistor (321) are connected to a third power supply, a gate of the second MOS transistor (321) and a second end of the seventh resistor (322) are connected to the temperature control module (2), a source of the second MOS transistor (321) is connected to a first end of the radiating fan (323), and a second end of the radiating fan (323) is grounded.

9. The temperature control system according to any one of claims 1 to 8, wherein the temperature control module (2) is a microprocessor, a field programmable gate array, or a complex programmable logic device.

10. A charging system, comprising the temperature control system for the device according to any one of claims 1 to 9.

11. A temperature control method, comprising:

obtaining (S801) a temperature at a current moment of a device;
obtaining (S802) a predicted temperature at a next moment based on the temperature at the current moment and a temperature prediction model; and
outputting (S803) a temperature adjustment instruction to adjust a temperature of the device based on the predicted temperature at the next moment and a temperature threshold;
the method being **characterised in that** the outputting the temperature adjustment instruction to adjust the temperature of the device based on the predicted temperature at the next moment and the temperature threshold comprises:

outputting (S8031) the temperature adjustment instruction to decrease the temperature of the device, if it is determined that the predicted temperature at the next moment is greater than the temperature threshold and a first difference obtained by subtracting the temperature threshold from the predicted temperature at the next moment is greater than a first threshold; and
outputting (S8032) the temperature adjustment instruction to increase the temperature of the device, if it is determined that the predicted temperature at the next moment is less than the temperature threshold and a second difference obtained by subtracting the predicted temperature at the next moment from the temperature threshold is greater than a second threshold.

12. The method according to claim 11, wherein the temperature prediction model is obtained by self-learning based on historical temperature data, or the temperature prediction model is pre-obtained.

13. The method according to claim 11, wherein the temperature prediction model is obtained by training based on historical temperature training data, comprising:

obtaining (S901) the historical temperature training data;
obtaining (S902) the temperature prediction model by training based on the historical temperature training data and an initial model.

14. An electronic device (600) comprising a memory (140), a processor (100) and a computer program stored in the memory and executable on the processor, wherein the processor is configured to execute the computer program to implement the steps of the method according to any one of claims 11 to 13.


**Patentansprüche**

1. Temperatursteuerungssystem für eine Vorrichtung, umfassend ein Temperaturerfassungsmodul (1), ein Temperatursteuerungsmodul (2) und ein Temperatureinstellungsmodul (3), wobei

das Temperaturerfassungsmodul (1) so konfiguriert ist, dass es eine Temperatur zu einem aktuellen Zeitpunkt einer Vorrichtung erfasst und erhält;
das Temperatursteuerungsmodul (2) so konfiguriert ist, dass es eine vorhergesagte Temperatur zu einem nächsten Zeitpunkt auf der Grundlage der Temperatur zum aktuellen Zeitpunkt und eines Temperaturvorhersagemodells erhält und eine Temperatureinstellungsanweisung an das Temperatureinstellungsmodul auf der Grundlage der vorhergesagten Temperatur zu dem nächsten Zeitpunkt und eines Temperaturschwellenwerts ausgibt; und
das Temperatureinstellungsmodul (3) so konfiguriert ist, dass es eine Temperatur der Vorrichtung auf der Grundlage der Temperatureinstellungsanweisung einstellt;
wobei das Temperatursteuerungssystem **dadurch gekennzeichnet ist, dass**:

das Temperatursteuerungsmodul (2) weiter so konfiguriert ist, dass es die Temperatureinstellungsanweisung ausgibt, um die Temperatur der Vorrichtung zu verringern, wenn bestimmt wird, dass die vorhergesagte Temperatur zu dem nächsten Zeitpunkt größer als der Temperaturschwellenwert ist und eine erste Differenz, die durch Subtrahieren des Temperaturschwellenwerts von der vorhergesagten Temperatur zu dem nächsten Zeitpunkt erhalten wird, größer als ein erster Schwellenwert ist; und
das Temperatursteuerungsmodul (2) weiter so konfiguriert ist, dass es die Temperatureinstellungsanweisung ausgibt, um die Temperatur der Vorrichtung zu erhöhen, wenn bestimmt wird, dass die vorhergesagte Temperatur zu dem nächsten Zeitpunkt unter dem Temperaturschwellenwert liegt und eine zweite Differenz, die durch Subtrahieren der vorhergesagten Temperatur zu dem nächsten Zeitpunkt von dem Temperaturschwellenwert erhalten wird, größer als ein zweiter Schwellenwert ist.

2. Temperatursteuerungssystem nach Anspruch 1, wobei das Temperaturvorhersagemodell durch Selbstlernen auf der Grundlage historischer Temperaturdaten erhalten wird oder das Temperaturvorhersagemodell vorab erhalten wird.

3. Temperatursteuerungssystem nach Anspruch 1, wobei das Temperaturerfassungsmodul (1) eine Temperaturerfassungseinheit (11) umfasst, die eine Thermoelement-Temperaturmessschaltung, eine Thermowiderstand-Temperaturmessschaltung oder ein Temperaturerfassungs-Chip ist.

4. Temperatursteuerungssystem nach Anspruch 3, wobei

das Temperaturerfassungsmodul (1) weiter eine Temperaturerfassungs-Präzisionsverarbeitungseinheit (12) umfasst, die eine Spannungsfolgerschaltung umfasst, wobei die Spannungsfolgerschaltung einen ersten Komparator (121) und einen ersten Kondensator (122) umfasst; der erste Komparator (121) ein erstes Ende, das mit der Temperaturerfassungseinheit (11) verbunden ist, ein zweites Ende, das mit einem Ausgangsende des ersten Komparators (121) verbunden ist, ein drittes Ende, das mit einer ersten Stromversorgung verbunden ist, und ein viertes Ende, das geerdet ist, umfasst; und der erste Kondensator (122) ein erstes Ende, das geerdet ist, und ein zweites Ende, das mit der ersten Stromversorgung verbunden ist, umfasst, oder

das Temperaturerfassungsmodul (1) weiter eine Temperaturerfassungs-Präzisionsverarbeitungseinheit (12) umfasst, die eine Rückkopplungsverstärkerschaltung umfasst, wobei die Rückkopplungsverstärkerschaltung einen zweiten Komparator (123), einen ersten Widerstand (124), einen zweiten Widerstand (125) und einen dritten Widerstand (126) umfasst, wobei ein zweites Ende des ersten Widerstands (124) mit einem zweiten Ende des zweiten Komparators (123) verbunden ist, ein erstes Ende des zweiten Komparators (123) mit einem ersten Ende des dritten Widerstands (126) beziehungsweise einem zweiten Ende des zweiten Widerstands (125) verbunden ist, ein zweites Ende des dritten Widerstands (126) mit einem Ausgangsende des zweiten Komparators (123) verbunden ist, ein erstes Ende des zweiten Widerstands (125) geerdet ist, ein drittes Ende des zweiten Komparators (123) mit einer ersten Stromversorgung verbunden ist und ein viertes Ende des zweiten Komparators (123) geerdet ist, oder

das Temperaturerfassungsmodul (1) weiter eine Temperaturerfassungs-Präzisionsverarbeitungseinheit (12) umfasst, die eine Filterschaltung umfasst, wobei die Filterschaltung einen vierten Widerstand (127), einen zweiten Kondensator (128) und eine Induktivität (129) umfasst, wobei ein zweites Ende des vierten Widerstands (127) mit einem ersten Ende des zweiten Kondensators (128) und einem ersten Ende der Induktivität (129) verbunden ist, wobei ein zweites Ende des zweiten Kondensators (128) geerdet ist und ein zweites Ende der Induktivität (129) mit dem Temperatursteuerungsmodul (2) verbunden ist.

5. Temperatursteuerungssystem nach Anspruch 1, wobei das Temperatureinstellungsmodul (3) eine Heizeinheit (31) und eine Kühleinheit (32) umfasst.

6. Temperatursteuerungssystem nach Anspruch 5, wobei die Heizeinheit (31) das Heizen mittels eines Heizwiderstandsdrahtes (311), einer elektrischen Kupferheizplatte, einer elektrischen Aluminiumheizplatte, einer elektrischen Keramikheizung, eines elektrischen Edelstahlheizrohrs, einer Steuerung einer Heizung durch Umluftkanal oder einer Heizung durch Reaktion chemischer Reagenzien realisiert, oder
die Kühleinheit (32) die Kühlung mittels fluidgekühlter Umluftkühlung, Metallwärmerohrleitungskühlung, Graphitplattenleitungskühlung, Halbleiterkühlung, Kühlung durch chemische Reagenzien oder Strahlungslüfter (323) realisiert.

7. Temperatursteuerungssystem nach Anspruch 5, wobei die Heizeinheit (31) einen Heizwiderstandsdraht (311), einen ersten MOS-Transistor (312), einen fünften Widerstand (313) und einen sechsten Widerstand (314) umfasst, wobei ein erstes Ende des Heizwiderstandsdrahtes (311) mit einer zweiten Stromversorgung verbunden ist, ein zweites Ende des Heizwiderstandsdrahtes (311) mit einem Drain des ersten MOS-Transistors (312) verbunden ist, ein Gate des ersten MOS-Transistors (312) mit einem ersten Ende des fünften Widerstands (313) beziehungsweise einem ersten Ende des sechsten Widerstands (314) verbunden ist, die Quelle des ersten MOS-Transistors (312) und ein zweites Ende des fünften Widerstands (313) geerdet sind und ein zweites Ende des sechsten Widerstands (314) mit dem Temperatursteuerungsmodul (2) verbunden ist.

8. Temperatursteuerungssystem nach Anspruch 5, wobei die Kühleinheit (32) einen zweiten MOS-Transistor (321), einen siebten Widerstand (322) und einen Strahlungslüfter (323) umfasst, wobei
ein erstes Ende des siebten Widerstands (322) und ein Drain des zweiten MOS-Transistors (321) mit einer dritten Stromversorgung verbunden sind, ein Gate des zweiten MOS-Transistors (321) und ein zweites Ende des siebten Widerstands (322) mit dem Temperatursteuerungsmodul (2) verbunden sind, eine Quelle des zweiten MOS-Transistors (321) mit einem ersten Ende des Strahlungslüfters (323) verbunden ist und ein zweites Ende des Strahlungslüfters (323) geerdet ist.

9. Temperatursteuerungssystem nach einem der Ansprüche 1 bis 8, wobei das Temperatursteuerungsmodul (2) ein Mikroprozessor, ein feldprogrammierbares Gate-Array oder eine komplexe programmierbare Logikvorrichtung ist.

10. Ladesystem, das das Temperatursteuerungssystem für die Vorrichtung nach einem der Ansprüche 1 bis 9 umfasst.

11. Temperatursteuerungsverfahren, umfassend:

Erhalten (S801) einer Temperatur zu einem aktuellen Zeitpunkt einer Vorrichtung;
Erhalten (S802) einer vorhergesagten Temperatur zu einem nächsten Zeitpunkt auf der Grundlage der Temperatur zu dem aktuellen Zeitpunkt und eines Temperaturvorhersagemodells; und

Ausgeben (S803) einer Temperatureinstellungsanweisung zum Einstellen einer Temperatur der Vorrichtung auf der Grundlage der vorhergesagten Temperatur zu dem nächsten Zeitpunkt und eines Temperaturschwellenwerts;

wobei das Verfahren **dadurch gekennzeichnet ist, dass**

das Ausgeben der Temperatureinstellungsanweisung zum Einstellen der Temperatur der Vorrichtung auf der Grundlage der vorhergesagten Temperatur zu dem nächsten Zeitpunkt und des Temperaturschwellenwerts umfasst:

Ausgeben (S8031) der Temperatureinstellungsanweisung zum Verringern der Temperatur der Vorrichtung, wenn bestimmt wird, dass die vorhergesagte Temperatur zu dem nächsten Zeitpunkt größer als der Temperaturschwellenwert ist und eine erste Differenz, die durch Subtrahieren des Temperaturschwellenwerts von der vorhergesagten Temperatur zu dem nächsten Zeitpunkt erhalten wird, größer als ein erster Schwellenwert ist; und

Ausgeben (S8032) der Temperatureinstellungsanweisung zum Erhöhen der Temperatur der Vorrichtung, wenn bestimmt wird, dass die vorhergesagte Temperatur zu dem nächsten Zeitpunkt kleiner als der Temperaturschwellenwert ist und eine zweite Differenz, die durch Subtrahieren der vorhergesagten Temperatur zu dem nächsten Zeitpunkt von dem Temperaturschwellenwert erhalten wird, größer als ein zweiter Schwellenwert ist.

12. Verfahren nach Anspruch 11, wobei das Temperaturvorhersagemodell durch Selbstlernen auf der Grundlage historischer Temperaturdaten erhalten wird oder das Temperaturvorhersagemodell vorab erhalten wird.

13. Verfahren nach Anspruch 11, wobei das Temperaturvorhersagemodell durch Trainieren auf der Grundlage historischer Temperaturtrainingsdaten erhalten wird, umfassend:

Erhalten (S901) der historischen Temperaturtrainingsdaten;

Erhalten (S902) des Temperaturvorhersagemodells durch Trainieren auf der Grundlage der historischen Temperaturtrainingsdaten und eines Anfangsmodells.

14. Elektronische Vorrichtung (600), umfassend einen Speicher (140), einen Prozessor (100) und ein in dem Speicher gespeichertes und auf dem Prozessor ausführbares Computerprogramm, wobei der Prozessor so konfiguriert ist, dass er das Computerprogramm ausführt, um die Schritte des Verfahrens nach einem der Ansprüche 11 bis 13 zu implementieren.

**Revendications**

1. Système de régulation de température pour un dispositif, comprenant un module de détection de température (1), un module de régulation de température (2) et un module d'ajustement de température (3), dans lequel

le module de détection de température (1) est configuré pour détecter et obtenir une température à un moment actuel d'un dispositif ;

le module de régulation de température (2) est configuré pour obtenir une température prédite à un moment suivant sur la base de la température au moment actuel et d'un modèle de prédiction de température, et pour produire en sortie une instruction d'ajustement de température vers le module d'ajustement de température sur la base de la température prédite au moment suivant et d'un seuil de température ; et

le module d'ajustement de température (3) est configuré pour ajuster une température du dispositif sur la base de l'instruction d'ajustement de température ;

le système de régulation de température étant **caractérisé en ce que** :

le module de régulation de température (2) est en outre configuré pour produire en sortie l'instruction d'ajustement de température de manière à diminuer la température du dispositif, s'il est déterminé que la température prédite au moment suivant est supérieure au seuil de température et qu'une première différence obtenue en soustrayant le seuil de température de la température prédite au moment suivant est supérieure à un premier seuil ; et

le module de régulation de température (2) est en outre configuré pour produire en sortie l'instruction d'ajustement de température de manière à augmenter la température du dispositif, s'il est déterminé que la température prédite au moment suivant est inférieure au seuil de température et qu'une seconde différence obtenue en soustrayant la température prédite au moment suivant du seuil de température est supérieure à un second seuil.

2. Système de régulation de température selon la revendication 1, dans lequel le modèle de prédiction de température est obtenu par auto-apprentissage sur la base de données de température historiques, ou le modèle de prédiction de température est préalablement obtenu.

3. Système de régulation de température selon la revendication 1, dans lequel le module de détection de température (1) comprend une unité de détection de température (11) qui est un circuit de mesure de température par thermocouple, un circuit de mesure de température par résistance thermique ou une puce d'acquisition de température.

4. Système de régulation de température selon la revendication 3, dans lequel

le module de détection de température (1) comprend en outre une unité de traitement de précision de détection de température (12) comprenant un circuit suiveur de tension, dans lequel le circuit suiveur de tension comprend un premier comparateur (121) et un premier condensateur (122) ;
le premier comparateur (121) comprend une première extrémité reliée à l'unité de détection de température (11), une deuxième extrémité reliée à une extrémité de sortie du premier comparateur (121), une troisième extrémité reliée à une première alimentation électrique, et une quatrième extrémité mise à la terre ; et le premier condensateur (122) comprend une première extrémité mise à la terre, et une deuxième extrémité reliée à la première alimentation électrique, ou
le module de détection de température (1) comprend en outre une unité de traitement de précision de détection de température (12) comprenant un circuit amplificateur de rétroaction, dans lequel le circuit amplificateur de rétroaction comprend un second comparateur (123), une première résistance (124), une deuxième résistance (125) et une troisième résistance (126), dans lequel une deuxième extrémité de la première résistance (124) est reliée à une deuxième extrémité du second comparateur (123), une première extrémité du second comparateur (123) est reliée à une première extrémité de la troisième résistance (126) et une deuxième extrémité de la deuxième résistance (125), respectivement, une deuxième extrémité de la troisième résistance (126) est reliée à une extrémité de sortie du second comparateur (123), une première extrémité de la deuxième résistance (125) est mise à la terre, une troisième extrémité du second comparateur (123) est reliée à une première alimentation électrique, et une quatrième extrémité du second comparateur (123) est mise à la terre, ou
le module de détection de température (1) comprend en outre une unité de traitement de précision de détection de température (12) comprenant un circuit de filtre, dans lequel le circuit de filtre comprend une quatrième résistance (127), un second condensateur (128) et un inducteur (129), dans lequel une deuxième extrémité de la quatrième résistance (127) est reliée à une première extrémité du second condensateur (128) et une première extrémité de l'inducteur (129), respectivement, une deuxième extrémité du second condensateur (128) est mise à la terre, et une deuxième extrémité de l'inducteur (129) est reliée au module de régulation de température (2).

5. Système de régulation de température selon la revendication 1, dans lequel le module d'ajustement de température (3) comprend une unité de chauffage (31) et une unité de refroidissement (32).

6. Système de régulation de température selon la revendication 5, dans lequel l'unité de chauffage (31) réalise un chauffage au moyen d'un fil de résistance chauffante (311), d'une plaque de chauffage électrique en cuivre, d'une plaque de chauffage électrique en aluminium, d'un chauffage électrique en céramique, d'un tube de chauffage électrique en acier inoxydable, d'un chauffage du conduit d'air de circulation de régulation ou d'un chauffage par réaction de réactifs chimiques, ou
l'unité de refroidissement (32) réalise un refroidissement au moyen d'un refroidissement à circulation de liquide, d'un refroidissement par conduction dans un caloduc métallique, d'un refroidissement par conduction dans une feuille de graphite, d'un refroidissement à semi-conducteur, d'un refroidissement à réactifs chimiques ou d'un ventilateur rayonnant (323).

7. Système de régulation de température selon la revendication 5, dans lequel l'unité de chauffage (31) comprend un fil de résistance chauffante (311), un premier transistor MOS (312), une cinquième résistance (313) et une sixième résistance (314), dans lequel
une première extrémité du fil de résistance chauffante (311) est reliée à une deuxième alimentation électrique, une deuxième extrémité du fil de résistance chauffante (311) est reliée à un drain du premier transistor MOS (312), une grille du premier transistor MOS (312) est reliée à une première extrémité de la cinquième résistance (313) et une première extrémité de la sixième résistance (314), respectivement, une source du premier transistor MOS (312) et une deuxième extrémité de la cinquième résistance (313) sont mises à la terre, et une deuxième extrémité de la sixième résistance (314) est reliée au module de régulation de température (2).

8. Système de régulation de température selon la revendication 5, dans lequel l'unité de refroidissement (32) comprend un second transistor MOS (321), une septième résistance (322) et un ventilateur rayonnant (323), dans lequel une première extrémité de la septième résistance (322) et un drain du second transistor MOS (321) sont reliés à une troisième alimentation électrique, une grille du second transistor MOS (321) et une deuxième extrémité de la septième résistance (322) sont reliées au module de régulation de température (2), une source du second transistor MOS (321) est reliée à une première extrémité du ventilateur rayonnant (323), et une deuxième extrémité du ventilateur rayonnant (323) est mise à la terre.

9. Système de régulation de température selon l'une quelconque des revendications 1 à 8, dans lequel le module de régulation de température (2) est un microprocesseur, un réseau prédiffusé programmable par l'utilisateur ou un dispositif logique programmable complexe.

10. Système de charge, comprenant le système de régulation de température pour le dispositif selon l'une quelconque des revendications 1 à 9.

11. Procédé de régulation de température, comprenant :

l'obtention (S801) d'une température à un moment actuel d'un dispositif ;
l'obtention (S802) d'une température prédite à un moment suivant sur la base de la température au moment actuel et d'un modèle de prédiction de température ; et
la production en sortie (S803) d'une instruction d'ajustement de température de manière à ajuster une température du dispositif sur la base de la température prédite au moment suivant et d'un seuil de température ;
le procédé étant **caractérisé en ce que**
la production en sortie de l'instruction d'ajustement de température de manière à ajuster la température du dispositif sur la base de la température prédite au moment suivant et du seuil de température comprend :

la production en sortie (S8031) de l'instruction d'ajustement de température de manière à diminuer la température du dispositif, s'il est déterminé que la température prédite au moment suivant est supérieure au seuil de température et qu'une première différence obtenue en soustrayant le seuil de température de la température prédite au moment suivant est supérieure à un premier seuil ; et
la production en sortie (S8032) de l'instruction d'ajustement de température de manière à augmenter la température du dispositif, s'il est déterminé que la température prédite au moment suivant est inférieure au seuil de température et qu'une seconde différence obtenue en soustrayant la température prédite au moment suivant du seuil de température est supérieure à un second seuil.

12. Procédé selon la revendication 11, dans lequel le modèle de prédiction de température est obtenu par auto-apprentissage sur la base de données de température historiques, ou le modèle de prédiction de température est préalablement obtenu.

13. Procédé selon la revendication 11, dans lequel le modèle de prédiction de température est obtenu par un entraînement sur la base de données d'entraînement de température historiques, comprenant :

l'obtention (S901) des données d'entraînement de température historiques ;
l'obtention (S902) du modèle de prédiction de température par un entraînement sur la base des données d'entraînement de température historiques et d'un modèle initial.

14. Dispositif électronique (600) comprenant une mémoire (140), un processeur (100) et un programme d'ordinateur stocké dans la mémoire et exécutable sur le processeur, dans lequel le processeur est configuré pour exécuter le programme d'ordinateur de manière à mettre en œuvre les étapes du procédé selon l'une quelconque des revendications 11 à 13.

1                    2                    3

| Temperature Detection Module | Temperature Control Module | Temperature Adjustment Module |

FIG. 1

VCC

R1

C1

TH1

GND

FIG. 2

1

Temperature Detection Module

11                    12                    2                    3

| Temperature Detection Unit | Temperature Detection Precision Processing Unit | Temperature Control Module | Temperature Adjustment Module |

FIG. 3

FIG. 4

FIG. 5

FIG. 6

FIG. 7

FIG. 8

FIG. 9

FIG. 10

obtaining a temperature at a current moment of a device  S801

obtaining a predicted temperature at a next moment based on the temperature at the current moment and a temperature prediction model  S802

outputting a temperature adjustment instruction to adjust a temperature of the device based on the predicted temperature at the next moment and a temperature threshold  S803

FIG. 11

obtaining the historical temperature training data — S901

obtaining the temperature prediction model by training based on the historical temperature training data and an initial model — S902

FIG. 12

outputting the temperature adjustment instruction to decrease the temperature of the device, if it is determined that the predicted temperature at the next moment is greater than the temperature threshold and a first difference obtained by subtracting the temperature threshold from the predicted temperature at the next moment is greater than a first threshold — S8031

outputting the temperature adjustment instruction to increase the temperature of the device, if it is determined that the predicted temperature at the next moment is less than the temperature threshold and a second difference obtained by subtracting the predicted temperature at the next moment from the temperature threshold is greater than a second threshold — S8032

FIG. 13

FIG. 14

FIG. 15

**EP 4 250 052 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110286584 A
- CN 107817685 A